# EUROPEAN PATENT APPLICATION

(11) **EP 4 715 562 A1**
(43) Date of publication of application: **25.03.2026**
(21) Application number: 25199885.2
(22) Date of filing: 03.09.2025
(51) Int. Cl.: G06F 3/12, H04W 84/12

(54) **INFORMATION TERMINAL, PERIPHERAL DEVICE COMMUNICABLE WITH INFORMATION TERMINAL, PROGRAM EXECUTED BY INFORMATION TERMINAL, AND CONNECTION INFORMATION TRANSMISSION METHOD USING INFORMATION TERMINAL**

(30) Priority: 18.09.2024 JP 2024160644
(71) Applicant: STAR MICRONICS CO., LTD., Shizuoka-shi, Shizuoka (JP)
(72) Inventor: Ito, Hiroki, Shizuoka-shi, Shizuoka (JP); Ochiai, Tomoya, Shizuoka-shi, Shizuoka (JP); Hosozawa, Kazumasa, Shizuoka-shi, Shizuoka (JP); Igarashi, Keisuke, Shizuoka-shi, Shizuoka (JP)
(74) Representative: Grünecker Patent- und Rechtsanwälte PartG mbB

(57) **Abstract**

To provide an information terminal and others that reduce the burden of work of setting connection information.

An information terminal is wirelessly communicable with a peripheral device using a first communication method. The information terminal is configured to acquire an indicator according to a distance between the information terminal and the peripheral device by using the first communication method. The information terminal is configured to transmit, to the peripheral device, connection information required for the peripheral device to connect to a network using a second communication method, based on the indicator reaching a predetermined value.

## Description

### CROSS-REFERENCES

The application claims priority of Japanese Patent No. 6619682 filed on September 18, 2024. The contents of this application are incorporated herein by reference in their entirety.

### BACKGROUND OF THE INVENTION

### 1. Field of the Invention

The present invention relates to an information terminal having a wireless communication function.

### 2. Description of the Related Art

In recent years, various devices having wireless communication functions have been widely used. Some of such devices set connection information for connecting to a wireless network via an external terminal (e.g., see Japanese Patent No. 6619682).

### SUMMARY OF THE INVENTION

For setting connection information via an external terminal as described in Japanese Patent No. 6619682, it is necessary to input connection information for each target device, requiring a long setting work.

The present invention has been made in consideration of the above-mentioned problem, and an object thereof is to provide an information terminal and others that reduce the burden of the work of setting the connection information.

An information terminal according to the present invention to achieve the above-mentioned object is an information terminal that is wirelessly communicable with a peripheral device using a first communication method,
the information terminal being configured to acquire an indicator according to a distance between the information terminal and the peripheral device by using the first communication method,
the information terminal being configured to transmit, to the peripheral device, connection information required for the peripheral device to connect to a network using a second communication method, based on the indicator reaching a predetermined value.

According to this information terminal, the connection information can be set in the peripheral device simply by bringing such a mobile terminal close to the peripheral device.

Here, the information terminal may transmit, when the indicator reaches the predetermined value, the connection information to the peripheral device without requiring any operation from a user.

According to this information terminal, the work of setting the connection information for the peripheral device can be done efficiently.

The information terminal may transmit, when there are a plurality of peripheral devices to which the connection information is to be transmitted, the connection information to the plurality of peripheral devices one by one, with a waiting time being set between previous transmission of the connection information and next transmission of the connection information.

According to this information terminal, the work of setting the connection information for the peripheral devices can be done reliably.

The information terminal may transmit, both when the indicator reaches the predetermined value and when transmission request information indicating that the peripheral device is a transmission destination is received according to the first communication method, the connection information to the peripheral device.

According to this information terminal, the work of setting the connection information for the peripheral devices can be performed reliably.

The information terminal may change the predetermined value depending on the number of peripheral devices that are wirelessly communicable using the first communication method.

According to this information terminal, the work of setting the connection information for the peripheral devices can be done reliably.

The information terminal may receive model information of the peripheral device according to the first communication method, and transmit information for setting a communication standard of the second communication method based on the model information.

According to this information terminal, setting work suitable for the peripheral device can be done.

The information terminal may receive communication setting information of the peripheral device according to the first communication method, and determine on the basis of the communication setting information whether or not the peripheral device is to be a transmission destination of the connection information.

According to this information terminal, the work of setting the connection information for the peripheral device can be made efficient.

A peripheral device communicable with the information terminal described above may be a peripheral device that prints out a network connection status based on the connection information being received from the information terminal.

With this configuration, it is possible to confirm that the connection information has been transmitted from the information terminal, and also to confirm from the printed content whether or not the connection information is correct.

A program of the present invention to achieve the above-mentioned object is
a program executed on an information terminal that is wirelessly communicable with a peripheral device using a first communication method,
the information terminal being configured to acquire an indicator according to a distance between the information terminal and the peripheral device by using the first communication method,
the program causing the information terminal to execute processing of transmitting, to the peripheral device, connection information required for the peripheral device to connect to a network using a second communication method, based on the indicator reaching a predetermined value.

According to this program, the connection information can be set in a peripheral device simply by bringing such a mobile terminal close to the peripheral device.

A connection information transmission method according to the present invention to achieve the above-mentioned object is
a connection information transmission method using an information terminal that is wirelessly communicable with a peripheral device using a first communication method,
the information terminal being configured to acquire an indicator according to a distance between the information terminal and the peripheral device by using the first communication method,
the connection information transmission method including a connection information transmitting step of transmitting, to the peripheral device, connection information required for connecting to a network using a second communication method, based on the indicator reaching a predetermined value.

According to this connection information transmission method, the connection information can be set in the peripheral device simply by bringing such a mobile terminal close to the peripheral device.

According to the present invention, connection information can be set in a peripheral device simply by bringing a mobile terminal close to the peripheral device.

### BRIEF DESCRIPTION OF THE DRAWINGS

FIG. 1 is a diagram illustrating an example of a state in which printers 2 are connected to an access point 4 through a wireless LAN;
FIG. 2 is a diagram illustrating an example of a state in which the printers 2 are not connected to the access point 4;
FIG. 3 is a diagram illustrating a hardware configuration of a mobile terminal 1;
FIG. 4 is a diagram illustrating a hardware configuration of the printer 2;
FIG. 5 is a flowchart illustrating a flow of processing of a connection information transmission program executed in the mobile terminal 1;
FIG. 6 is a flowchart illustrating a flow of processing of wireless connection when the printer 2 is powered on;
FIG. 7 is an example of a timing chart of a setting operation of wireless LAN connection information for the printer 2;
FIG. 8 is a diagram illustrating a scene when a program of the mobile terminal 1 is started in the timing chart of FIG. 7;
FIG. 9 is a diagram illustrating a scene when the mobile terminal 1 approaches a printer 2 (first printer) in the timing chart of FIG. 7;
FIG. 10 is a diagram illustrating a scene after the mobile terminal 1 transmits connection information to the printer 2 (first printer) in the timing chart of FIG. 7;
FIG. 11 is a diagram illustrating a scene when the mobile terminal 1 approaches a printer 2 (second printer) in the timing chart of FIG. 7;
FIGS. 12A to 12D illustrate examples of display content of a display unit 15 of the mobile terminal 1;
FIGS. 13A and 13B illustrate examples of display content of the display unit 15 of the mobile terminal 1; and
FIGS. 14A and 14B illustrate examples of information displayed for enabling connection information to be transmitted.

### DETAILED DESCRIPTION

An exemplary embodiment of the present invention will be described below with reference to the drawings.

### Summary Description

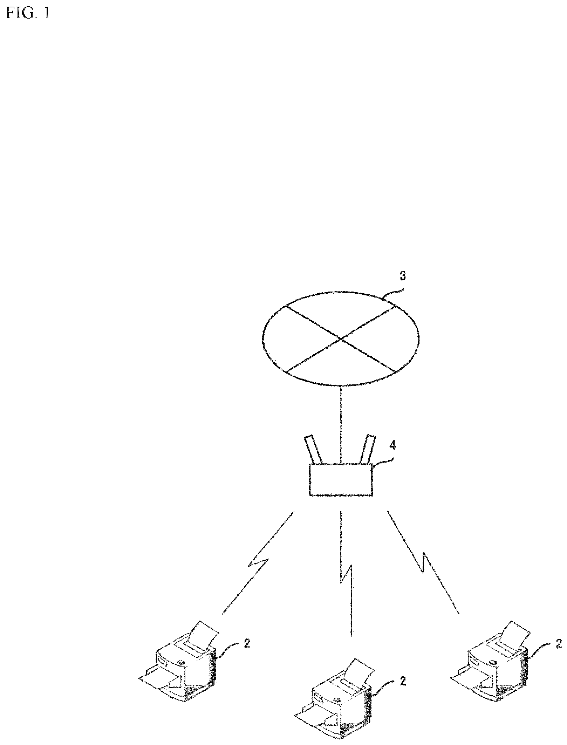

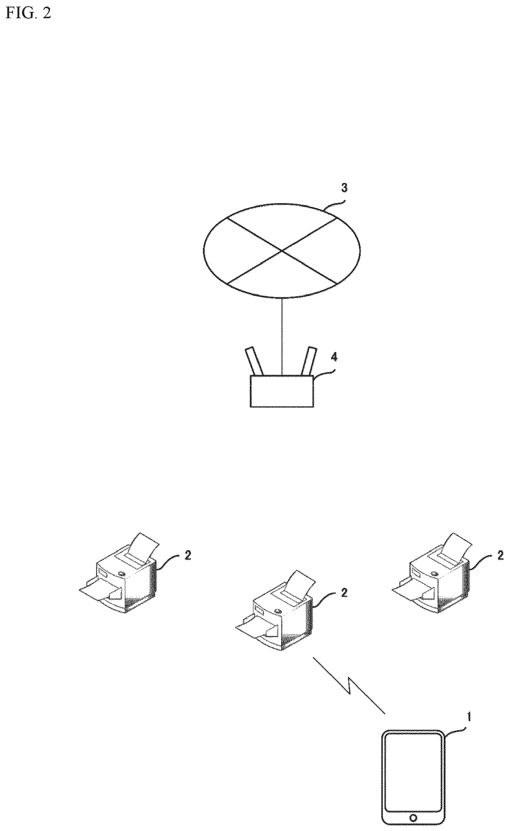

FIG. 1 is a diagram illustrating an example of a state in which printers 2 are connected to an access point 4 through a wireless LAN, and FIG. 2 is a diagram illustrating an example of a state in which the printers 2 are not connected to the access point 4.

FIG. 1 illustrates the printers 2, a network 3, and the access point 4 for connecting to the network 3 through a wireless LAN. In the example of FIG. 1, each printer 2 is set to an STA mode with which it connects to the access point 4 through a wireless LAN. This makes the printer 2 join the network 3 via the access point 4, and enables a device connected to the network 3 side to control the output of the printer 2.
The device connected to the network 3 side can acquire information (e.g., status information) from the printer 2.

FIG. 2 also illustrates a wirelessly communicable mobile terminal 1 in addition to the printers 2, the network 3, and the access point 4, which are the same as in FIG. 1. In the example of FIG. 2, one of the printers 2 is connected to the mobile terminal 1 using BLE (described later). In this example, the printers 2 have no wireless LAN connection information set for the access point 4, and are not connected through a wireless LAN.

As illustrated in FIG. 1, in order to connect a printer 2 to a desired wireless LAN access point (access point 4 in FIG. 1), it is necessary to set wireless LAN connection information for this access point 4. However, since no wireless LAN connection information is set in the factory default settings, it is not possible to connect to the access point 4 as it is. The mobile terminal 1 of the present embodiment employs a configuration in which, as illustrated in FIG. 2, the mobile terminal 1 connects using BLE to a transmission destination of wireless LAN connection information (printer 2 in FIG. 2), and transmits the wireless LAN connection information to this connected device. A specific configuration of the mobile terminal 1 and the printer 2 will be described below.

### Hardware Configuration of Mobile Terminal 1

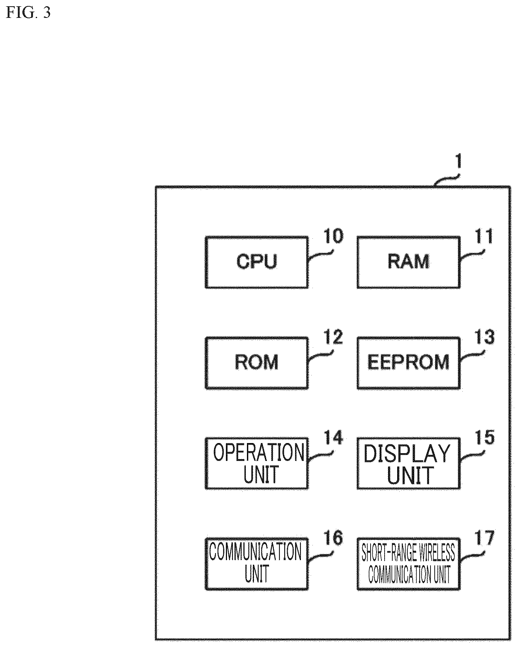

FIG. 3 is a block diagram illustrating a hardware configuration of the mobile terminal 1.

The mobile terminal 1 includes a CPU 10, a RAM 11, a ROM 12, an EEPROM 13, an operation unit 14, a display unit 15, a communication unit 16, and a short-range wireless communication unit 17.

The CPU 10 controls the mobile terminal 1 by executing programs stored in the ROM 12 and the EEPROM 13. The RAM 11 is used as a working area for the CPU 10 to execute various types of processing. The EEPROM 13 is a non-volatile storage device, and can hold the information therein even when the mobile terminal 1 is powered off.

The operation unit 14 includes a power switch for the mobile terminal 1 and a touch panel.

The display unit 15 includes a display (e.g., an organic EL display or a liquid crystal display) that displays various types of information.

The communication unit 16 controls wireless LAN communication with an external device using a communication method conforming to the IEEE802.11 series standards.

The short-range wireless communication unit 17 controls communication with an external device using Bluetooth Low Energy (hereinafter, referred to as BLE), which is one of the communication methods of the Bluetooth (registered trademark) standard.

### Hardware Configuration of Printer 2

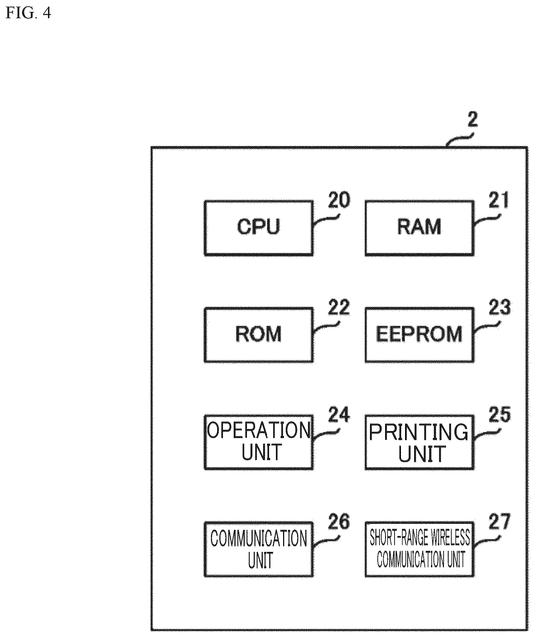

FIG. 4 is a block diagram illustrating a hardware configuration of the printer 2.

The printer 2 includes a CPU 20, a RAM 21, a ROM 22, an EEPROM 23, an operation unit 24, a printing unit 25, a communication unit 26, and a short-range wireless communication unit 27.

The CPU 20 controls the printer 2 by executing programs stored in the ROM 22 and the EEPROM 23. The RAM 21 is used as a working area for the CPU 20 to execute various types of processing. The EEPROM 23 is a non-volatile storage device, and can hold the information therein even when the power of the printer 2 is turned off. This EEPROM 23 is used to store various types of information such as connection information for the access point.

The operation unit 24 includes a power switch for the printer 2 and an initialization switch for returning the printer 2 to its factory default state.

The printing unit 25 performs printing on a sheet of paper set in accordance with an instruction from the CPU 20.

The communication unit 26 controls wireless LAN communication with an external device using a communication method conforming to the IEEE802.11 series standards.

The short-range wireless communication unit 27 controls communication with an external device using BLE.

### Flowchart of Connection Information Transmission by Mobile Terminal 1

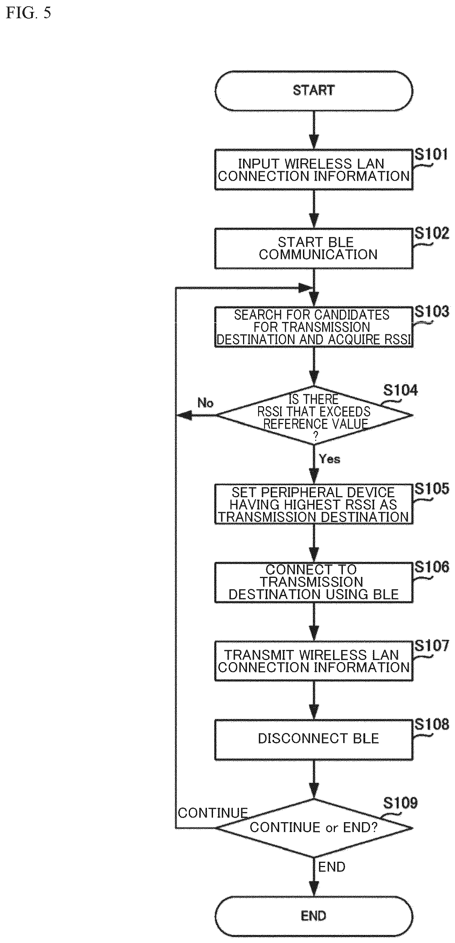

The EEPROM 13 of the mobile terminal 1 stores a connection information transmission program for transmitting to a peripheral device such as the printer 2 wireless LAN connection information (SSID and password) required for wireless LAN connection. The processing of this connection information transmission program will be described below with reference to the drawings. FIG. 5 is a flowchart illustrating a flow of processing of the connection information transmission program.

First, in the first step S101, the wireless LAN connection information (SSID and password) to be transmitted to a peripheral device is input to the mobile terminal 1. For example, in the case of FIG. 2, information for connecting to the access point 4 is input.

When inputting this wireless LAN connection information, the wireless LAN connection history of the mobile terminal 1 may be used. For example, the SSID and password of the wireless LAN for the access point to which the mobile terminal 1 is currently connected or the access point to which it was most recently connected may be automatically input into input fields. Alternatively, the SSID and password may be automatically input into the input fields in a manner that displays the connection history of the access point and selects one from the history. With such a configuration, the burden of input work on the user can be reduced. Of course, a different SSID may be input instead of using the automatically input SSID.

Input of wireless LAN connection information may be performed in a manner that saves in the mobile terminal 1 the SSID and password input when the connection information transmission program was previously executed, and automatically inputs the saved SSID and password into the input fields when the connection information transmission program is subsequently executed. With this configuration, it is also possible to reduce the burden of input work on the user.

In step S102, wireless communication using BLE is started.

In step S103, pieces of data (advertising packet) broadcast from peripheral devices according to BLE are received, and a search is performed for candidates for peripheral devices to be transmission destinations of wireless LAN connection information, based on information contained in the advertising packet. In the present embodiment, the candidates are peripheral devices for which wireless LAN connection information is found to be unset, based on information contained in the advertising packet. When the candidates for peripheral devices are determined, the received signal strength indication (RSSI) at the time of receiving the advertising packet is also acquired for each peripheral device.

In step S104, it is determined whether or not any of the candidates for peripheral devices found in step S103 has an RSSI value that exceeds a certain reference value. If there is a candidate that satisfies this condition, the processing proceeds to step S105, and if there is no candidate that satisfies this condition, the processing returns to step S103.

In step S105, the peripheral device having the highest RSSI value among the candidates for peripheral devices found in step S103 is set as the transmission destination of the wireless LAN connection information.

In step S106, a BLE connection is established with the peripheral device set in step S105.

In step S107, the wireless LAN connection information input in step S101 is transmitted to the peripheral device connected using BLE in step S106.

In step S108, the connection with the peripheral device connected using BLE in step S106 is disconnected.

In step S109, an operation is received as to whether or not to continue the setting work of wireless LAN connection information for a peripheral device. If an operation to continue is received, the processing returns to step S103, and if an operation to end is received, the connection information transmission program ends.

### Flowchart of Wireless Connection for Printer 2

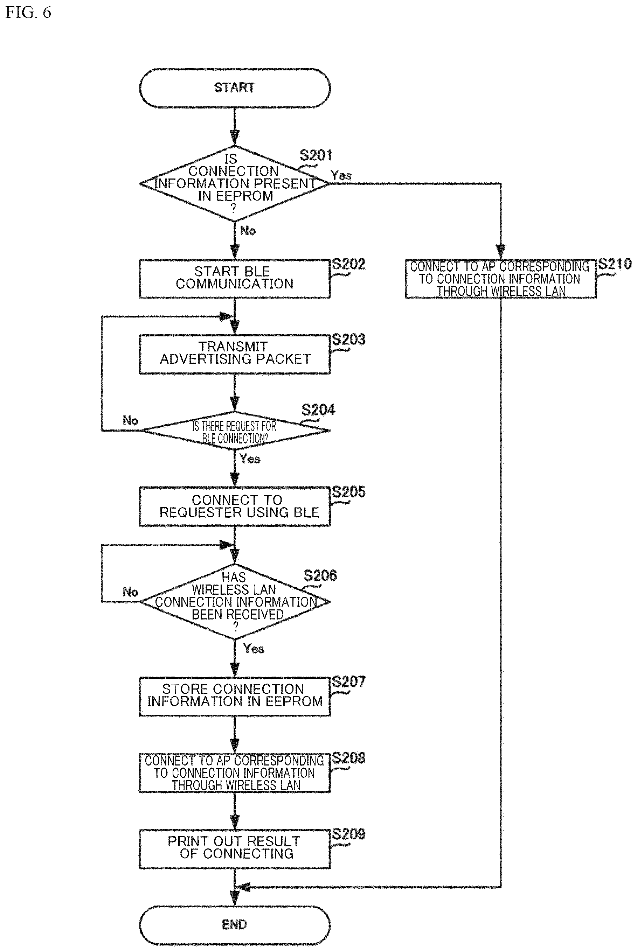

The operation of the printer 2 when it is powered on will be described below with reference to the drawings. FIG. 6 is a flowchart illustrating a flow of processing of wireless connection when the printer 2 is powered on. In the printer 2, a program for each of the above-described types of processing is stored in the ROM 22, and when the printer 2 is powered on, the CPU 20 reads out and executes this program.

First, in the first step S201, if wireless LAN connection information is present in the EEPROM 23, the processing proceeds to step S210, and if wireless LAN connection information is not present, the processing proceeds to step S202.

In step S202, wireless communication using BLE is started.

In step S203, an advertising packet is broadcast using BLE.

In step S204, it is determined whether or not there is a request for BLE connection from the mobile terminal 1. If there is a request, the processing proceeds to step S205, and if there is no request, the processing returns to step S203.

In step S205, a BLE connection is established with the requester mobile terminal 1. Note that in the present embodiment, a configuration (Just Works) is adopted in which the mobile terminal 1 of the connection partner is authenticated without any user operation.

In step S206, it is determined whether or not wireless LAN connection information has been received from the mobile terminal 1 connected using BLE. If it has been received, the processing proceeds to step S207, and if it has not been received, step S206 is repeated.

In step S207, the wireless LAN connection information received in step S206 is stored in the EEPROM 23, and then the processing proceeds to step S208.

In step S208, processing of connecting to an access point corresponding to the wireless LAN connection information stored in the EEPROM 23 is performed (STA mode).

In step S209, the result of connecting to the access point in step S208 is printed out, and then the processing of wireless connection when the printer 2 is powered on ends.

On the other hand, if wireless LAN connection information is present in the EEPROM 23 when power on, the processing proceeds to step S210 to perform processing of connecting to an access point corresponding to the wireless LAN connection information stored in the EEPROM 23 (STA mode), and then the processing of wireless connection when the printer 2 is powered on ends.

Although the printer 2 of the present embodiment is configured to store the wireless LAN connection information in the EEPROM, the storage medium for the wireless LAN connection information is not limited to this example and may be, for example, a Flash ROM.

Example of Operation of Setting Wireless LAN Connection Information for Printer 2 On the basis of the above description, an example of an operation of setting wireless LAN connection information for the printer 2 will be described below with reference to the drawings.

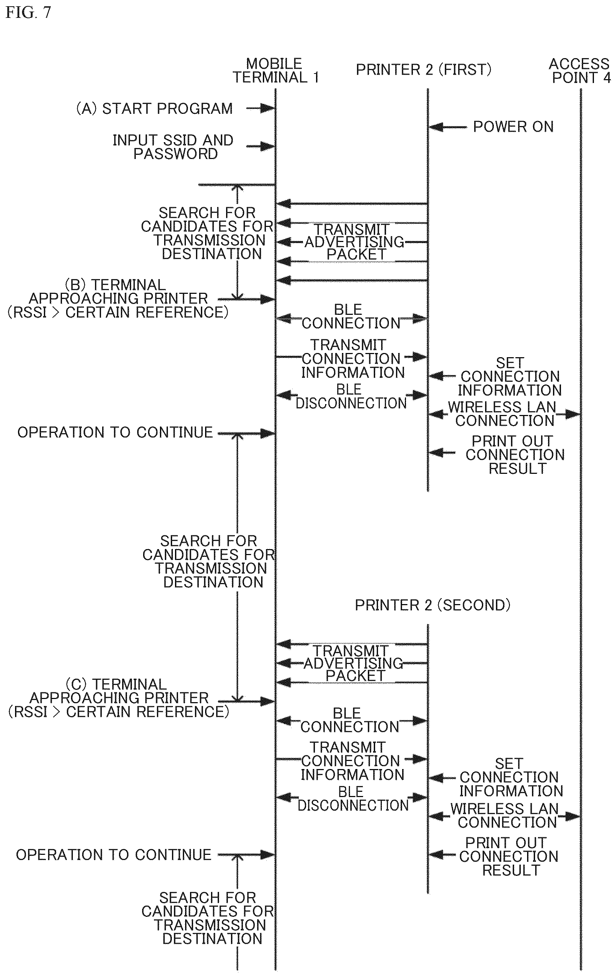

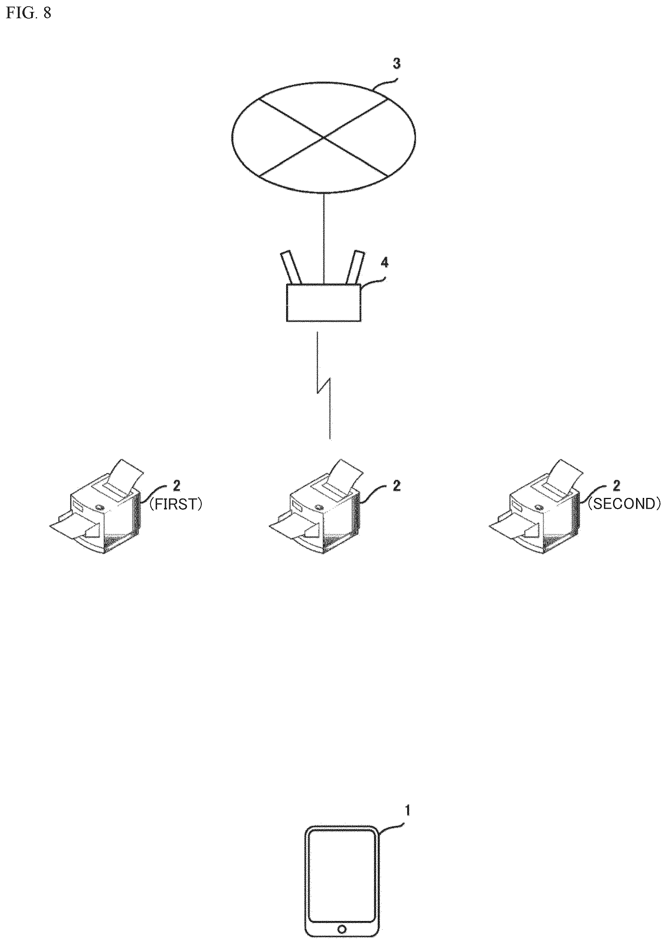

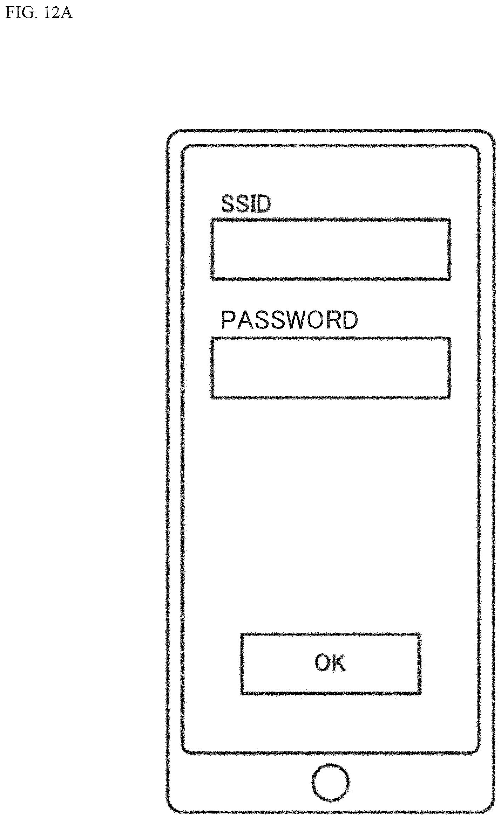

FIG. 7 is an example of a timing chart of the operation of setting wireless LAN connection information for printers 2. FIG. 7 illustrates operations and communication exchanges of the mobile terminal 1, the printers 2 (first printer, second printer), and the access point 4. FIGS. 8 to 11 are diagrams illustrating the respective states at the timings of the timing chart of FIG. 7. FIGS. 12A to 12D are diagrams illustrating an example of a display content of the display unit 15 of the mobile terminal 1.

First, the connection information transmission program is started in the mobile terminal 1 (hereinafter, timing (A)). FIG. 8 illustrates that the mobile terminal 1 is located away from each printer 2 (at a distance where the RSSI does not exceed a certain reference value) as the scene at this timing (A). Then, wireless LAN connection information (SSID and password) is input in accordance with this connection information transmission program (step S101 in FIG. 5). FIG. 12A illustrates an example of an input screen at this time. After that, BLE wireless communication is started, and candidates for transmission destination of the wireless LAN connection information are searched for (steps S102 to S104 in FIG. 5).

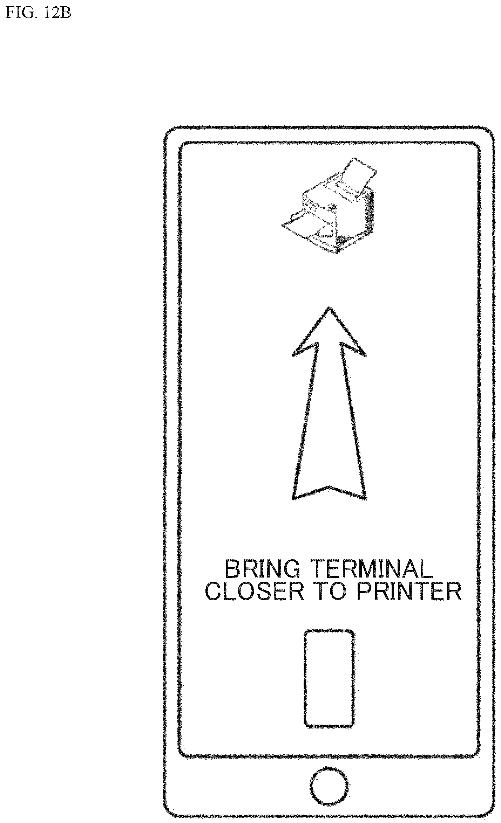

On the other hand, when each printer 2 (first and second) is powered on, and since no connection information is set in the EEPROM 23, the processing of transmitting an advertising packet is repeated using BLE (steps S203 and S204 in FIG. 6). When receiving this advertising packet, the mobile terminal 1 sets the two printers 2 as candidates for transmission destination of the wireless LAN connection information. Although a printer 2 that is already connected through a wireless LAN is illustrated in FIGS. 8 to 11, this printer 2 is excluded from the candidates for transmission destination. FIG. 12B illustrates an example of a screen for prompting to approach the printer 2 that is a candidate for transmission destination.

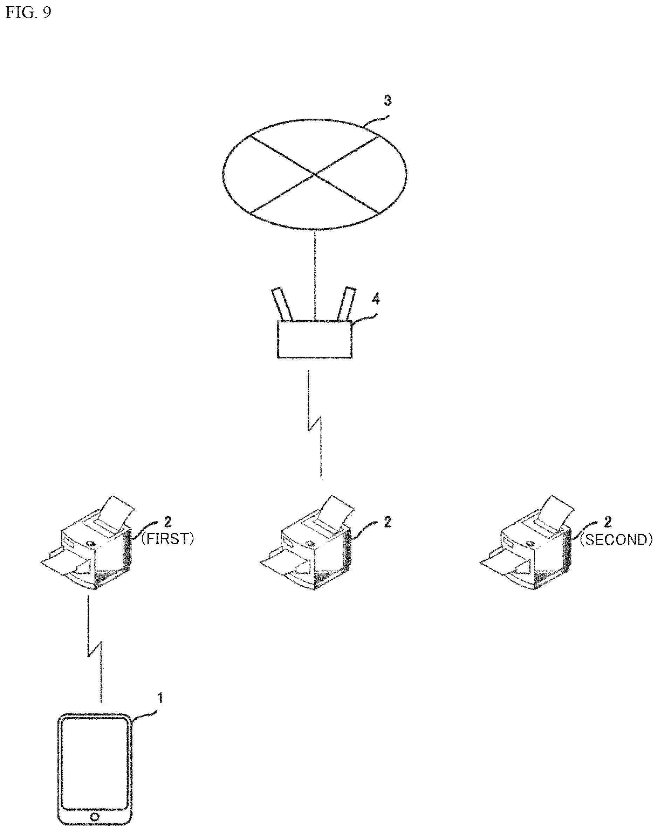

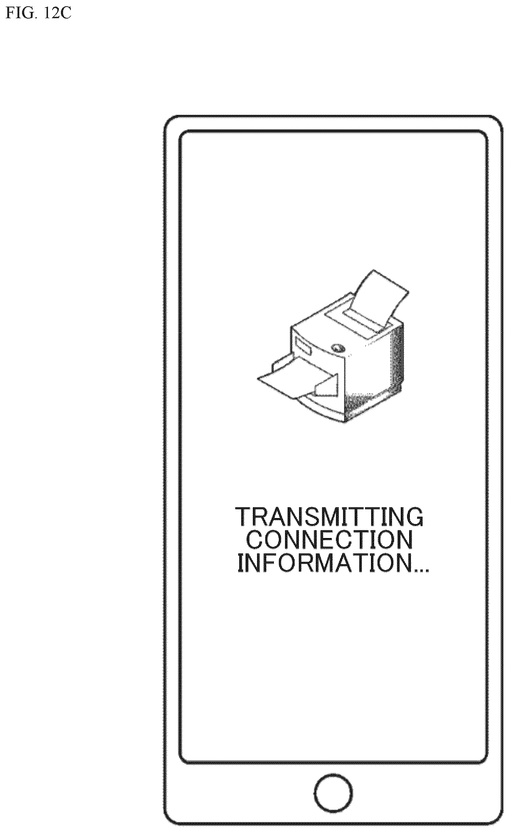

In the above state, it is assumed that the mobile terminal 1 approaches the first printer 2, and the RSSI value corresponding to the advertising packet of the first printer 2 exceeds a certain reference value (hereinafter, timing (B)). FIG. 9 illustrates that a BLE connection between the mobile terminal 1 and the first printer 2 is established as the scene at this timing (B). When this BLE connection is established, wireless LAN connection information is transmitted from the mobile terminal 1 to the first printer 2 (steps S104 to S107 in FIG. 5, steps S204 and S205 in FIG. 6). FIG. 12C illustrates an example of a screen on which the wireless LAN connection information is being transmitted to the connected printer 2.

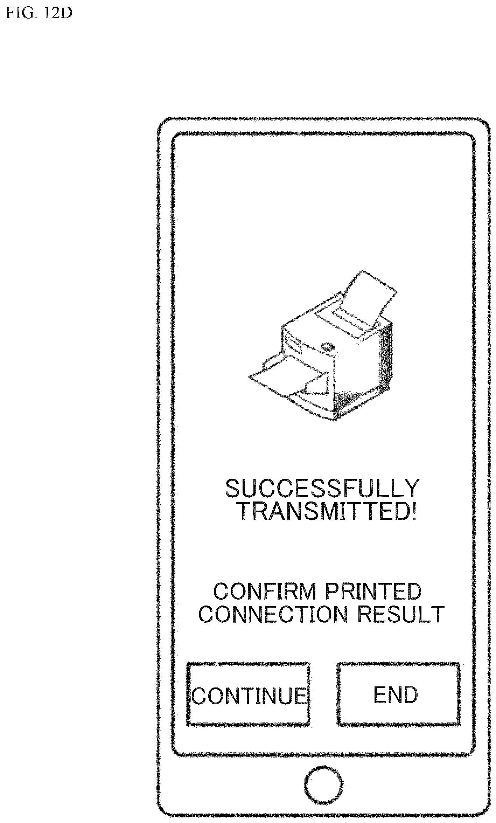

When receiving the wireless LAN connection information, the first printer 2 stores and sets this information in the EEPROM 23, and uses this information to establish a wireless LAN connection to the access point 4 (steps S207 and S208 in FIG. 6). Then, the result of making this wireless LAN connection is printed out (step S209 in FIG. 6). FIG. 12D illustrates an example of a screen on which a message is displayed to prompt to confirm the printed content when the wireless LAN connection information is successfully transmitted.

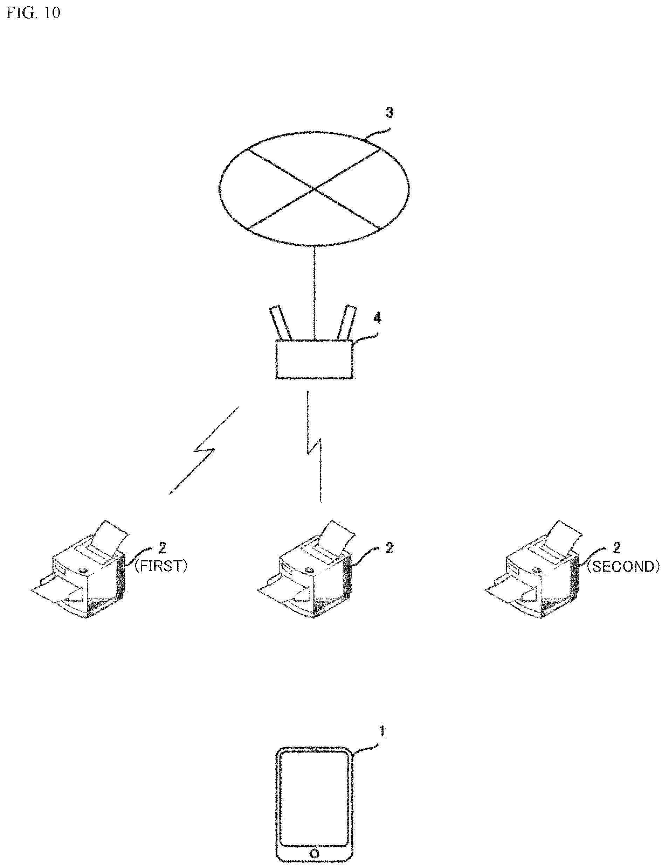

On the other hand, when transmitting the wireless LAN connection information, the mobile terminal 1 disconnects the BLE connection with the first printer 2, and further receives an operation as to whether to continue or end the work of transmitting the wireless LAN connection information. FIG. 12D illustrates an example of a screen displaying a continue button and an end button for the work of transmitting the wireless LAN connection information. Here, in the example of FIG. 7, it is assumed that an operation to continue (operation on the continue button in FIG. 12D) has been performed. This operation causes a search to be performed again for candidates for transmission destination of the wireless LAN connection information (step S109, steps S103 to S104 in FIG. 5). FIG. 10 illustrates a scene in which the mobile terminal 1 is moving away from the first printer 2 to the second printer 2. Although FIG. 10 illustrates a printer 2 that is already connected through a wireless LAN between the first printer 2 and the second printer 2, this printer 2 is excluded from the candidates for transmission destination.

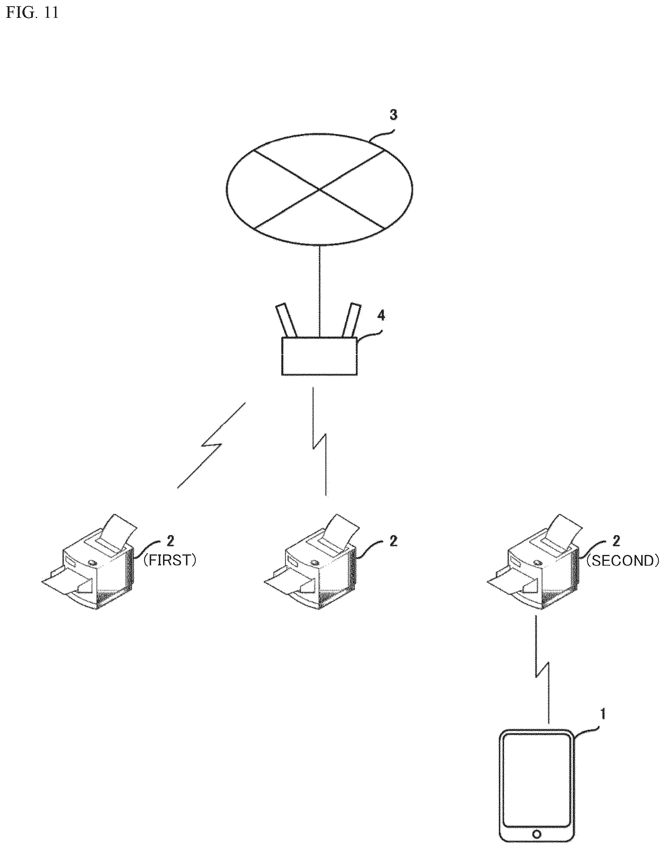

After that, it is assumed that the mobile terminal 1 approaches the second printer 2, and the RSSI value corresponding to the advertising packet of the second printer 2 exceeds a certain reference value (hereinafter, timing (C)). FIG. 11 illustrates that a BLE connection between the mobile terminal 1 and the second printer 2 is established as the scene at this timing (C). Once this BLE connection is established, the wireless LAN connection information will be set in the same way as for the first printer.

In the embodiment described above, the connection information transmission program continues in response to an operation to continue by the user. However, after connection information is transmitted to a peripheral device, the connection information transmission program may continue without requiring any operation by the user. With this configuration, while a peripheral device is setting connection information, the connection information can be transmitted to the next peripheral device, so that the work of transmitting the connection information to a plurality of peripheral devices can be done smoothly. In this case, another end button may be provided to end the connection information transmission program as appropriate.

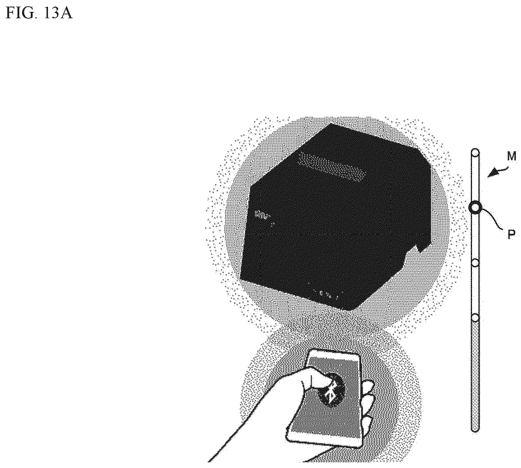

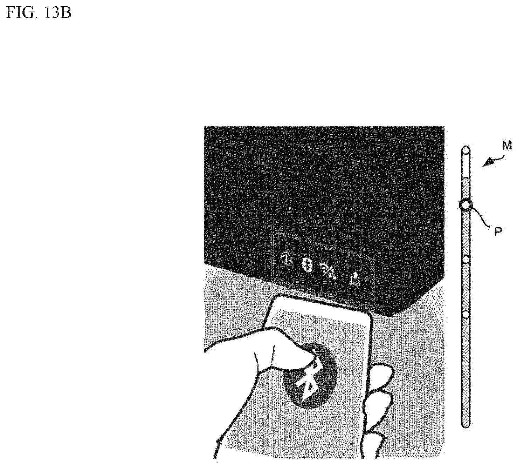

In FIG. 12B referred to above, an example of a screen for prompting to approach the printer 2 that is a candidate for transmission destination has been described. Meanwhile, the degree of approach to prompt may be made clearer to be displayed. For example, FIG. 13A illustrates an example in which an indicator of the radio wave strength of each of the target printer 2 and the mobile terminal 1 is displayed in a circular gradation, and a meter M indicating the degree of approach to prompt is displayed on the right side of a screen. In this meter M, the current radio wave strength (corresponding to the RSSI value) is displayed in a cross-hatched area, and the radio wave strength (corresponding to the certain reference value) corresponding to a distance at which the connection information is transmitted is displayed in a slightly larger circle P. FIG. 13B illustrates a state in which the mobile terminal 1 has come close enough to the printer 2 and is at a distance at which the connection information can be transmitted (the cross-hatched area is beyond the circle P). FIG. 13B also illustrates an image of the printer 2 having been changed in response to the approach.

If incorrect connection information is transmitted to the printer 2 in the above work, the printer 2 may connect to an unintended access point based on this connection information, or may fail to connect to any access point at all. This scene can be confirmed from the printed content, and it can be determined that work is to be done such as resetting the printer 2 to return it to its initial state, for example.

As described above, in the present embodiment, a configuration is adopted in which, simply by bringing the mobile terminal 1 close to the printer 2, pre-set wireless LAN connection information is transmitted. With this configuration, even if there are a plurality of printers 2, the wireless LAN connection information can be easily set by simply bringing the mobile terminal 1 close to a printer 2. By confirming the result of connecting based on the wireless LAN connection information printed out from the printer 2, it is possible to confirm that the wireless LAN connection information has been transmitted from the mobile terminal 1 to the printer 2, and also to confirm from the printed content whether the wireless LAN connection has been successful or unsuccessful.

### Technical Ideas and Modifications

By referring to the embodiment of the mobile terminal 1 and the printer 2 described above, their technical ideas and other possible configurations will be described below. The corresponding components/elements in the embodiment will be described in parentheses.

The mobile terminal 1 described above is
an information terminal (e.g., the mobile terminal 1) that is wirelessly communicable with a peripheral device (e.g., a printer 2) using a first communication method (e.g., BLE),
the information terminal being configured to acquire an indicator (e.g., an RSSI value) according to a distance between the information terminal and the peripheral device by using the first communication method,
the information terminal being configured to transmit, to the peripheral device, connection information (e.g., SSID and password) required for the peripheral device to connect to a network using a second communication method (e.g., STA mode), based on the indicator reaching a predetermined value (a value corresponding to a predetermined strength of RSSI).

With the above configuration, the connection information required for the peripheral device to connect to the network using the second communication method can be continuously transmitted to the peripheral device simply by bringing the information terminal close to the peripheral device, making it easy to set the connection information.

In the examples described above, RSSI is used as an indicator according to the distance between the information terminal and the peripheral device, and transmission of the connection information is triggered when the value of the indicator reaches the predetermined value. However, this indicator may be any indicator as long as it can be determined that the information terminal has come close to the peripheral device (based on the distance between the information terminal and the peripheral device). In other words, this indicator is not limited to an indicator that uses radio wave strength such as RSSI, and may be, for example, an indicator such as the time it takes for the peripheral device to return a response to a request from the information terminal. Alternatively or additionally, a mechanism for measuring the distance itself (e.g., phase-based distance measurement) may be used. This predetermined value can be set according to the working scene as appropriate, for example, such as in the case where the distance between the information terminal and the peripheral device is about 1 m, setting a corresponding value.

In the embodiment described above, a configuration has been described in which BLE is used as an example of the first communication method and STA mode (IEEE802.11 series standard) is used as an example of the second communication method. However, these communication methods are merely examples, and other standards such as Wi-Fi Direct (registered trademark), ZigBee (registered trademark), and Wireless USB may also be used. In order to achieve the above-described advantageous effects, the communication methods, such as the standard and mode, are not limited, and any configuration may be used as long as the connection information required to connect to the network using the second communication method can be transmitted to the peripheral device using the first communication method when the distance indicator in the first communication method reaches a predetermined value.

The mobile terminal 1 is an example of an information terminal, and may be, for example, a desktop PC, a laptop PC, or a tablet, and is not limited to the configuration of the embodiment. The printer 2 is an example of a peripheral device, and is not limited to the configuration of the embodiment as long as it can be connected to the network using the second communication method.

In the information terminal (mobile terminal 1) of the embodiment described above, a configuration is adopted in which connection information (wireless LAN connection information) is transmitted to the peripheral device having the highest distance indicator (closest) among peripheral devices whose distance indicator has reached the predetermined value (whose RSSI value has exceeded the certain reference value). However, the configuration may also be such that connection information (wireless LAN connection information) is transmitted uniformly to all peripheral devices whose distance indicator has reached the predetermined value (peripheral devices within a certain range from the information terminal). With this configuration, the connection information can be uniformly transmitted to a plurality of peripheral devices in the vicinity of the information terminal, which may improve convenience.

In the information terminal (mobile terminal 1) of the embodiment described above, a configuration is adopted in which, when the distance indicator reaches the predetermined value (when the RSSI value exceeds the certain reference value), connection information (wireless LAN connection information) is transmitted to a peripheral device (printer 2) without requiring any operation from the user. With this configuration, the connection information can be transmitted to the peripheral device by the user simply moving with the information terminal (mobile terminal 1), so that it is possible to do network setting work efficiently and easily. In this configuration, it may include a configuration in which a waiting time is provided between when the distance indicator reaches the predetermined value and when the connection information is transmitted. With such a waiting time being provided, the setting work for printers can be done reliably one by one. This configuration of the waiting time may be a configuration in which the connection information is transmitted when it is determined that the waiting time has elapsed when the state in which the distance indicator has reached the predetermined value continues for a certain period of time, or a configuration in which the connection information is transmitted when it is determined that the waiting time has elapsed when a cumulative time of the state in which the distance indicator has reached the predetermined value reaches a certain period of time.

**In** the information terminal (mobile terminal 1) of the embodiment described above, a configuration is adopted in which when the distance indicator reaches the predetermined value (when the RSSI value exceeds the certain reference value), connection information (wireless LAN connection information) is transmitted to a peripheral device (printer 2) without requiring any operation from the user. However, a configuration may also be adopted in which any operation from the user is required to transmit the connection information. For example, a configuration may be adopted in which some kind of notification is given when the distance indicator reaches the predetermined value, and when the user performs a transmission permission operation on the information terminal in response to this notification, connection information is transmitted to a peripheral device. The notification in this case may be, for example, a notification of sound output, or may be a notification of vibration using a vibration function, if any, of the information terminal. The transmission permission operation may be an operation on a hardware button instead of a button displayed on the screen, or a gesture operation such as shaking the smartphone. The notifications and transmission permission operations as exemplified above do not require the user to confirm the screen, so that the setting work can be done easily.

In the information terminal (mobile terminal 1) of the embodiment described above, a configuration is adopted in which connection information is transmitted to a peripheral device for which connection information is found to be unset from information contained in information from the peripheral device (advertising packet from a printer 2) using the first communication method. However, a configuration may be adopted in which a peripheral device transmits, to the information terminal, transmission request information indicating a transmission destination of connection information, and when receiving this transmission request information, the information terminal transmits the connection information. In other words, a configuration may be adopted in which, if transmission request information indicating that a peripheral device is a transmission destination of connection information has been received according to the first communication method at the time when the distance indicator reaches the predetermined value (the time when the RSSI value exceeds the certain reference value), the connection information is transmitted to the peripheral device. The conditions for a peripheral device transmitting transmission request information include when the corresponding button on the peripheral device is pressed; when connection information is unset; when the peripheral device has been set in advance as a connection target in response to a setting command or the like; when a certain period of time has elapsed since the peripheral device was started up without connecting to a network; and when the cover of the peripheral device is open.

In the information terminal (mobile terminal 1) of the embodiment described above, a configuration is adopted in which the predetermined value does not change. However, a configuration may be adopted in which the predetermined value is changed depending on the scene. For example, a configuration may be adopted in which the predetermined value is changed as the number of peripheral devices to be searched increases. For example, a configuration may be adopted in which, in order to address the problem that an increased number of peripheral devices make it difficult to know which peripheral device the setting work is being done, the predetermined value is changed to match the value of the distance indicator when the distance between the information terminal and the peripheral device gets short. With this configuration, the information terminal needs to be brought closer to a peripheral device, so that the setting work can be performed more reliably. For example, a configuration may be adopted in which, if the distance indicator of a found peripheral device does not reach the predetermined value for a certain period of time, the predetermined value is changed to match the value of the distance indicator when the distance between the information terminal and the peripheral device gets long. With this configuration, even if the distance is determined to be long depending on the model or environment, the range in which a peripheral device can be set as a transmission destination is expanded, making it possible to do the setting work.

In the information terminal (mobile terminal 1) of the embodiment described above, information from a peripheral device using the first communication method (advertising packet from a printer 2) is used. However, by further using model information from the peripheral device using the first communication method, the setting work using the second communication method can be made more efficient. For example, processing of setting the communication standard of the second communication method according to the model information from the peripheral device may be performed to respond to changes in the communication standard for the peripheral device and model upgrades. By adopting this configuration, the setting work suitable for the peripheral device can be done without the user being aware of it. Without limitation to the configuration using an advertising packet, a configuration may be adopted in which model information is received while connected using the first communication method (BLE connection in the examples described above), and connection information for each peripheral device is transmitted according to this model information.

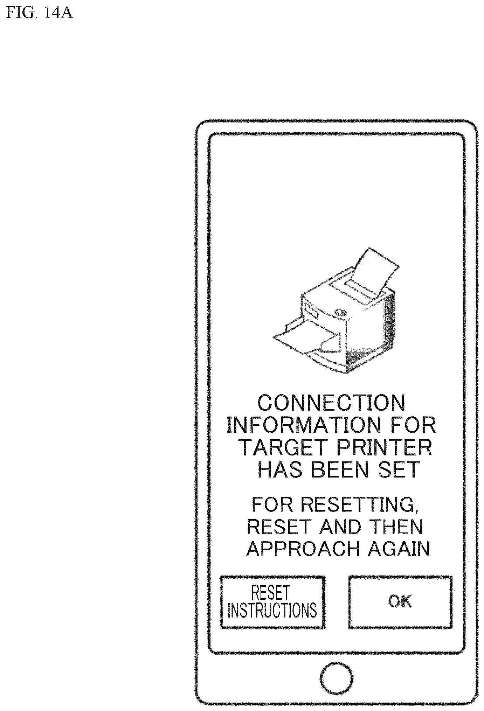

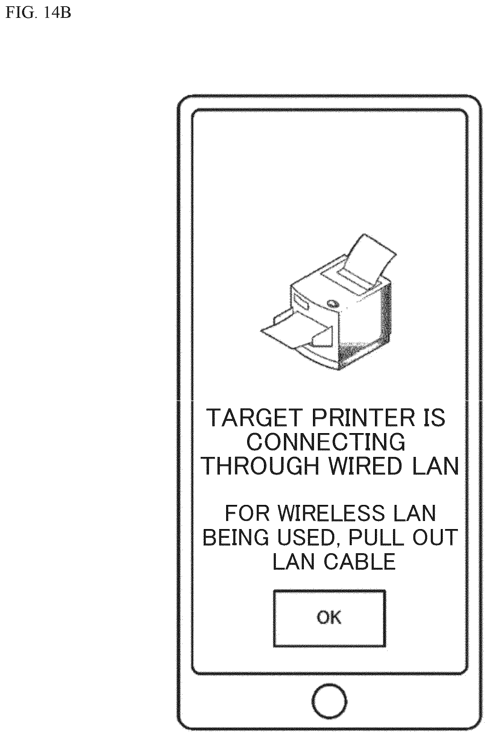

In the information terminal (mobile terminal 1) of the embodiment described above, a configuration is adopted in which connection information is transmitted to a peripheral device for which connection information is found to be unset from information contained in information from the peripheral device (advertising packet from a printer 2) using the first communication method. However, a configuration may be adopted in which communication setting information of the peripheral device is used to determine whether or not it is to be a transmission destination in this way. Using the communication setting information enables a configuration in which, if connection information can be transmitted to a peripheral device whose distance indicator has reached the predetermined value, the information terminal connects to the peripheral device (a BLE connection in the examples described above) and transmits the connection information to the peripheral device as in the embodiment described above, whereas if connection information cannot be transmitted to the peripheral device whose distance indicator has reached the predetermined value, the information terminal does not transmit the connection information to the peripheral device. For example, in a configuration in which the advertising packet in the embodiment described above contains various types of communication setting information such as "wireless LAN connection information unset", "wireless LAN connection information set", and "wireless LAN connection information disable to set (e.g., a model that cannot be connected to a wired LAN and a wireless LAN at the same time is already connected to the wired LAN)", for a peripheral device that is determined to be in a state where connection information cannot be transmitted to the peripheral device based on this communication setting information, the connection information may not be transmitted, and information for enabling transmission of connection information (e.g., an address to a web page describing reset instructions or solution) may also be displayed. For example, when approaching a printer 2 for which wireless LAN connection information has been set (e.g., the printer 2 in the middle of FIG. 10), a screen such as that illustrated in FIG. 14A may be displayed to prompt access to information for enabling transmission of connection information (here, reset instructions). For example, when approaching a printer 2 connected through a wired LAN, a screen such as that illustrated in FIG. 14B may be displayed to display information for enabling use of a wireless LAN. In the configurations described above, there are a case where connection information is transmitted by approaching a peripheral device, as illustrated in FIG. 12D, and cases where information for enabling transmission of connection information is displayed, as illustrated in FIGS. 14A and 14B. For the information for enabling transmission of connection information, a configuration may be adopted in which the information terminal connects to a peripheral device using the first communication method and then displays information transmitted from the peripheral device, or a configuration may be adopted in which the information terminal displays its own information without connecting to a peripheral device using the first communication method.

In the above-described example of FIG. 14A, a case has been described in which the state where the wireless LAN connection information has been set is treated as a state where the connection information cannot be transmitted. However, even for a state where the wireless LAN connection information has been set, it may be treated as a state where the connection information can be transmitted. For example, a configuration may be adopted in which a printer 2 for which wireless LAN connection information has already been set may be set as a candidate for transmission destination of connection information, and when new wireless LAN connection information is transmitted to this printer 2, the already set wireless LAN connection information is overwritten with the new wireless LAN connection information.

In the above description, a configuration has been described in which the information terminal receives transmission request information, model information, and communication setting information from a peripheral device before connecting to the peripheral device using the first communication method (a configuration using an advertising packet from a printer 2). However, a configuration may be adopted in which the information terminal connects to a peripheral device using the first communication method based on the distance indicator (a BLE connection in the examples described above), receives the above-listed information (transmission request information, model information, and communication setting information), and transmits connection information according to this information. Specifically, by connecting to a peripheral device whose distance indicator has reached the predetermined value using the first communication method (a BLE connection in the examples described above) and then receiving transmission request information, model information, or communication setting information, the information terminal can transmit connection information according to such information, use a transmission method for the model information, and even display information for enabling the connection information to be transmitted without transmitting the connection information. In other words, the transmission of the transmission request information, model information, and communication setting information from a peripheral device may be performed using the first communication method. In the examples described above, a configuration may be adopted in which the information terminal transmits the information after establishing a BLE connection, or may transmit the information using an advertising packet before establishing a BLE connection. Even in this case, a configuration can be adopted in which the information terminal connects to a peripheral device whose distance indicator has reached the predetermined value (a BLE connection in the examples described above) and transmits connection information, whereas if connection information cannot be transmitted to the peripheral device whose distance indicator has reached the predetermined value, the information terminal does not transmit connection information to the peripheral device.

In the embodiment described above, each peripheral device is a printer, and a configuration is adopted in which the network connection status is printed out after connection information is received. With this configuration, it is possible to confirm that the connection information has been transmitted from the information terminal, and also to confirm from the printed content whether or not the connection information is correct. Without limitation to a configuration in which the network connection status is printed out at a peripheral device, the network connection status of the peripheral device may be confirmed at the information terminal side. For example, after the connection information is transmitted, the connection status of the peripheral device may be received by means of an advertising packet or the like, and this may be displayed on the information terminal. For example, after the connection information is transmitted, the information terminal may connect to the peripheral device again and receive the connection status, which may then be displayed on the information terminal.

### Configuration for Settings for USB Printer

Normally, to use a printer, a printer driver that processes print requests from applications is installed in the information terminal. This allows printing to be performed from an application running on the information terminal using the printer connected to the information terminal. In this scene of "printer driver is essential for using printer", various types of software including a printer setting tool may be installed together, causing a problem of an increased amount of data to be installed. Furthermore, if the libraries for these types of software are standardized, even if the amount of data can be reduced, it becomes difficult to separate the software groups, causing a problem that requires a printer driver even if one desires only to use the setting tool.

For a USB-connected printer, the operation of a setting tool, which does not require a printer driver, will now be described. This setting tool performs the following operations.
1. Enumerate (search for) USB printers in the registry
2. Select the USB printer to be set from among the found USB printers
3. Acquire the USB port of the selected USB printer
4. Transmit and receive information about the settings to and from the acquired USB port The setting tool that performs the above operations allows setting work for a USB-connected printer without requiring a printer driver.

## Claims

1. An information terminal that is wirelessly communicable with a peripheral device using a first communication method,
the information terminal being configured to acquire an indicator according to a distance between the information terminal and the peripheral device by using the first communication method,
the information terminal being configured to transmit, to the peripheral device, connection information required for the peripheral device to connect to a network using a second communication method, based on the indicator reaching a predetermined value.

2. The information terminal according to claim 1, wherein
the information terminal is configured to, when the indicator reaches the predetermined value, transmit the connection information to the peripheral device without requiring any operation from a user.

3. The information terminal according to claim 2, wherein
the information terminal is configured to, when there are a plurality of peripheral devices to which the connection information is to be transmitted, transmit the connection information to the plurality of peripheral devices one by one, with a waiting time being set between previous transmission of the connection information and next transmission of the connection information.

4. The information terminal according to claim 1, wherein
the information terminal is configured to, both when the indicator reaches the predetermined value and when transmission request information indicating that the peripheral device is a transmission destination is received according to the first communication method, transmit the connection information to the peripheral device.

5. The information terminal according to any one of claims 1 to 4, wherein
the information terminal is configured to change the predetermined value depending on the number of peripheral devices that are wirelessly communicable using the first communication method.

6. The information terminal according to any one of claims 1 to 4, wherein
the information terminal is configured to receive model information of the peripheral device according to the first communication method, and transmit information for setting a communication standard of the second communication method based on the model information.

7. The information terminal according to any one of claims 1 to 3, wherein
the information terminal is configured to receive communication setting information of the peripheral device according to the first communication method, and determine on the basis of the communication setting information whether or not the peripheral device is to be a transmission destination of the connection information.

8. A peripheral device communicable with the information terminal according to any one of claims 1 to 4,
the peripheral device being configured to print out a network connection status based on the connection information being received from the information terminal.

9. A program executed on an information terminal that is wirelessly communicable with a peripheral device using a first communication method,
the information terminal being configured to acquire an indicator according to a distance between the information terminal and the peripheral device by using the first communication method,
the program causing the information terminal to execute processing of transmitting, to the peripheral device, connection information required for the peripheral device to connect to a network using a second communication method, based on the indicator reaching a predetermined value.

10. A connection information transmission method using an information terminal that is wirelessly communicable with a peripheral device using a first communication method,
the information terminal being configured to acquire an indicator according to a distance between the information terminal and the peripheral device by using the first communication method,
the connection information transmission method including a connection information transmitting step of transmitting, to the peripheral device, connection information required for connecting to a network using a second communication method, based on the indicator reaching a predetermined value.
